# EUROPEAN PATENT APPLICATION

(11) **EP 2 306 148 A2**
(43) Date of publication of application: **06.04.2011**
(21) Application number: 10169445.3
(22) Date of filing: 13.07.2010
(51) Int. Cl.: G01C 19/56

(54) **Angular velocity detecting apparatus**

(30) Priority: 08.09.2009 JP 2009206576
(71) Applicant: Hitachi Automotive Systems, Ltd., Hitachinaka-shi Ibaraki 312-8503 (JP)
(72) Inventor: Nakamura, Toshiaki, Tokyo 100-8220 (JP); Matsumoto, Masahiro, Tokyo 100-8220 (JP); Asano, Satoshi, Tokyo 100-8220 (JP); Iwasawa, Hiroshi, Tokyo 100-8220 (JP)
(74) Representative: MERH-IP Matias Erny Reichl Hoffmann

(57) **Abstract**

An angular-velocity detecting apparatus including a synchronous-detection unit 39 for performing the synchronous detection of a displacement signal from a vibrator 4, a unit 43 for changing a voltage value so that the output of the synchronous-detection unit 39 always becomes equal to its maximum value, the voltage value being applied to a resonant-frequency adjusting electrode 31, and a unit 32 for feeding back the output of the voltage-value changing unit 43 to the resonant-frequency adjusting electrode 31 in a detection-axis direction.

## Description

### BACKGROUND OF THE INVENTION

The present invention relates to a vibration-type angular-velocity sensor. More particularly, it relates to an angular-velocity sensor which reduces the influence of a phase variation in the displacement signal of a vibrator.

In JP-A-2005-43098, there is disclosed an apparatus for controlling the vibration-type angular-velocity sensor with a high accuracy.

### SUMMARY OF THE INVENTION

In the vibration-type angular-velocity sensor, in order to maintain the detection sensitivity of the sensor at a constant value, the resonant frequency in a driving-axis direction and the resonant frequency in a detection-axis direction which is orthogonal to the driving-axis direction are adjusted so that both of the resonant frequencies coincide with each other, or make a constant frequency difference therebetween. There exists a problem, however, that the relationship between the resonant frequencies in the driving-axis direction and the detection-axis direction varies, and that the detection sensitivity of the sensor varies accordingly. This variation in the relationship therebetween occurs due to such factors as a pressure variation inside a housing for enclosing the sensor therein, and a temperature variation and an elapsed-time deterioration in the sensor element and its control circuit themselves.

In order to address the above-described problem, in the technology disclosed in JP-A-2005-43098, there is provided a detection driving circuit for vibrating a vibrator at a desired resonant frequency in the detection-axis direction. Then, the vibrator is vibrated in the detection-axis direction. Moreover, the resonant frequency in the detection-axis direction is adjusted so that the gain of the sensor output becomes equal to a desired value.

In view of the circumstances like this, the present invention has been devised. The vibration into the detection-axis direction is detected by inputting a desired resonant-frequency signal into a leakage vibration leaking from the driving-axis direction into the detection-axis direction, or inputting the signal into a servo-control electrode on the direction side. Furthermore, based on this detection result, the resonant frequency in the detection-axis direction is adjusted. In this way, the resonant frequency in the driving-axis direction and the resonant frequency in the detection-axis direction are caused to coincide with each other, or to make the constant frequency difference therebetween.

The above-described problem is solved as follows. Namely, in an angular-velocity detecting apparatus, a displacement is detected, the displacement occurring permanently in a second direction regardless of the occurrence of an angular velocity, and the resonant frequency in the second direction is adjusted in response to the output of this detection result.

Also, the above-described problem is solved as follows. Namely, in an angular-velocity detecting apparatus, there are provided a unit for inputting a signal into a servo electrode, the servo electrode being provided on a vibrator in order to suppress a displacement of the vibrator into a second direction, the signal being designed for vibrating the vibrator in the second direction, a unit for detecting the displacement which occurs in the second direction, and/or a unit for adjusting the resonant frequency in the second direction in response to the output of this detection result.

At all times, the resonant frequencies in the driving-axis direction and the detection-axis direction can be adjusted so that both of the resonant frequencies coincide with each other, or make a constant frequency difference therebetween. As a result, it becomes possible to maintain the detection sensitivity of the sensor at a constant value.

Other objects, features and advantages of the invention will become apparent from the following description of the embodiments of the invention taken in conjunction with the accompanying drawings.

### BRIEF DESCRIPTION OF THE DRAWINGS

Fig. 1 illustrates the configuration of a signal processing circuit of an angular-velocity sensor according to a first embodiment of the present invention;
Fig. 2 illustrates a timing chart for the signal processing circuit of the angular-velocity sensor according to the first embodiment of the present invention;
Fig. 3 illustrates the configuration of a signal processing circuit of an angular-velocity sensor according to a second embodiment of the present invention;
Fig. 4 illustrates a timing chart for the signal processing circuit of the angular-velocity sensor according to the second embodiment of the present invention;
Fig. 5 illustrates the sensor-sensitivity characteristics relative to the resonant frequency;
Fig. 6 illustrates the vibration characteristics in the case where the angular velocity is absent;
Fig. 7 illustrates the vibration characteristics in the case where the angular velocity is present;
Fig. 8 illustrates the vibration characteristics at the time of the servo control; and
Fig. 9 illustrates the vibration characteristics at the time of the fy adjustment.

### DESCRIPTION OF THE INVENTION

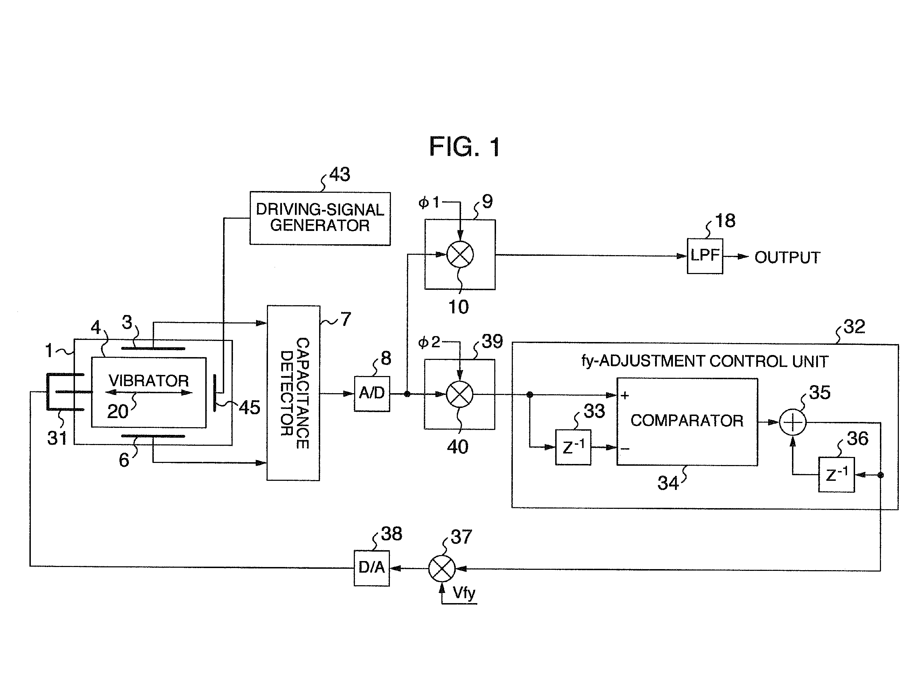

Hereinafter, referring to Fig. 1, Fig. 2, and Fig. 5 to Fig. 7, the explanation will be given below concerning embodiments of the present invention.

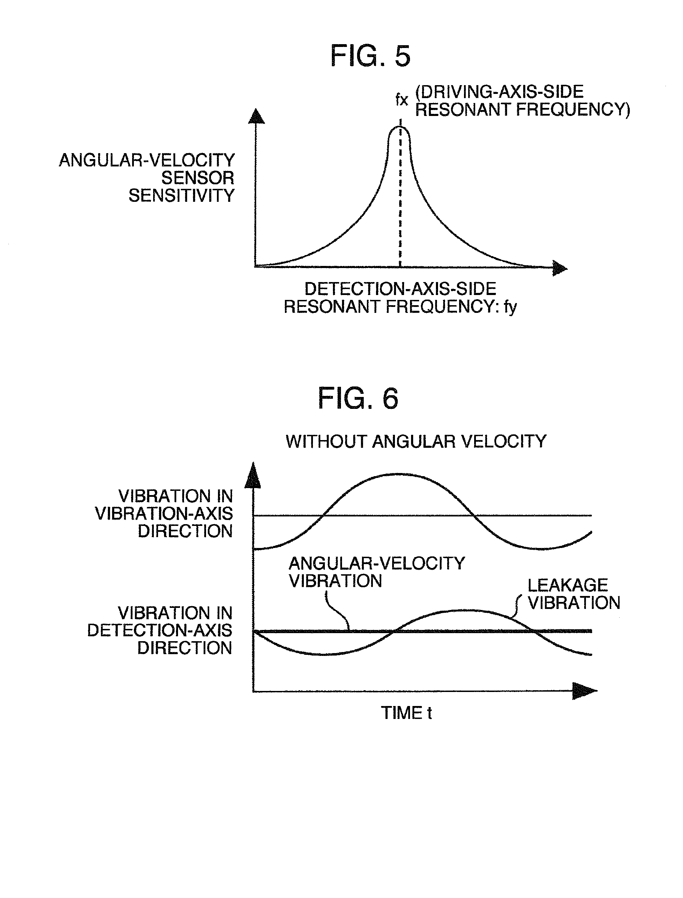

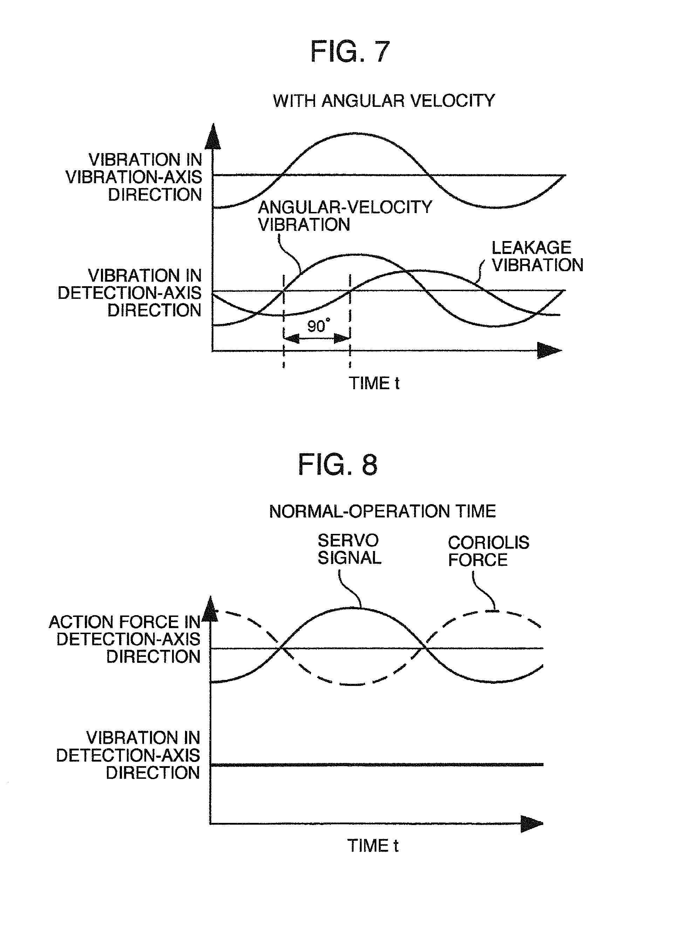

Fig. 5 is a diagram for illustrating the resonant frequency fy on the detection-axis side and characteristics of the angular-velocity sensor sensitivity relative thereto. As illustrated in Fig. 5, when the resonant frequency fy coincides with the resonant frequency fx in the vibration-axis direction, the sensor sensitivity becomes its maximum value. The sensor sensitivity being equal to its maximum value means that the sensor output becomes its maximum value.
Accordingly, in the present embodiment, the sensor output is detected. Then, using a fy-adjustment control unit 32 illustrated in Fig. 1, a feedback control is executed over a fy-adjustment electrode 31 so that the sensor output is always maintained at its maximum value. Fig. 6 illustrates vibration waveforms in the respective vibration-axis and detection-axis directions in a case where no angular velocity is applied. Also, Fig. 7 illustrates vibration waveforms in the respective vibration-axis and detection-axis directions in a case where an angular velocity is applied. In Fig. 6 where the angular velocity is absent, there occurs none of a vibration attributed to the angular velocity in the detection-axis direction.
However, there always occurs a leakage vibration from the vibration-axis direction. The reason for this phenomenon is as follows: On account of a characteristics variation in the manufacturing of the sensor element and a distortion due to the stress, the vibrator vibrates in a direction which is slightly oblique from the vibration-axis direction. As a result, a vibration component into the detection-axis direction occurs, which causes the occurrence of the above-described leakage vibration. Meanwhile, in Fig. 7 where the angular velocity is present, in addition to the leakage vibration from the vibration-axis direction, the vibration attributed to the angular velocity is generated in the detection-axis direction.
Also, when the resonant frequency fx in the vibration-axis direction and the resonant frequency fy in the detection-axis direction are equal to each other, there exist characteristics from Fig. 7 that the phase of the leakage vibration delays by the amount of 90° as compared with the phase of the angular-velocity vibration. In view of the circumstances described so far, in the present embodiment, attention is focused on the leakage vibration which always occurs regardless of the presence or absence of the angular velocity. Then, a control of making fx and fy equal to each other is employed and implemented by adjusting the fy-adjustment electrode 31 so that the amplitude of the leakage vibration always becomes its maximum value. Also, letting a synchronous-detection signal be Φ2, an angular-velocity signal has the 90-°phase difference as compared therewith. Accordingly, in the synchronous detection using Φ2, the synchronous-detection output becomes equal to zero even in the case where the angular velocity is applied. Consequently, when this angular-velocity sensor is installed on, e.g., an automobile, the control can be executed where fx = fy is always implemented not only at the time of the stationary state before the driving of the automobile, but also at the time of the driving thereof when the angular velocity is generated.

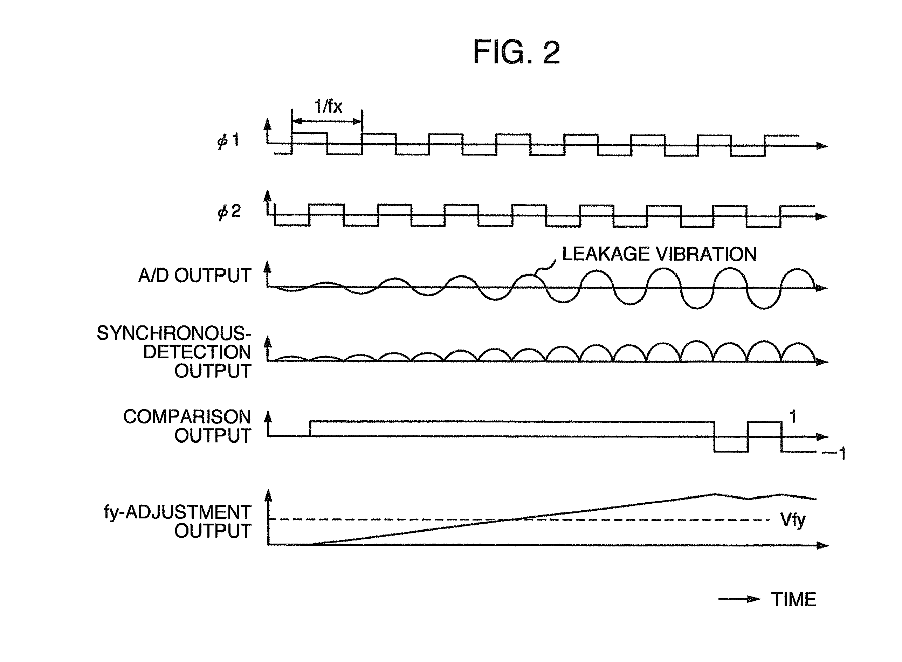

Fig. 1 is the block diagram for illustrating a control circuit (i.e., signal processing circuit) of the angular-velocity sensor according to the first embodiment. Fig. 2 illustrates the timing chart for the control circuit of the angular-velocity sensor according to the first embodiment. A detection element 1 of the angular-velocity sensor according to the present embodiment includes the following configuration components: A vibrator 4 which has a predetermined mass, and which vibrates at the predetermined resonant frequency fx in the vibration-axis direction 20 illustrated in Fig. 1, a driving electrode 45 for vibrating the vibrator 4 in the vibration-axis direction, fixed electrodes 3 and 6 (i.e., displacement detecting units) which are deployed in a manner of being opposed to the vibrator 4, and which detect a displacement in accordance with a change in the electrostatic capacity, the displacement being caused to occur in the vibrator 4 in the direction perpendicular to the vibration-axis direction by a Coriolis force which is generated by the application of an angular velocity to the detection element 1, and the fy-adjustment electrode 31 for adjusting the resonant frequency fy of the vibration that is caused to occur in the vibrator 4 in the direction perpendicular to the vibration-axis direction. The signal processing circuit includes the following configuration components: A driving-signal generator 43 for generating and transmitting, to the driving electrode 45, an AC signal for the vibration at the resonant frequency fx in the vibration-axis direction, a capacitance detector 7 for detecting the displacement by detecting a difference between the electrostatic capacity between the vibrator 4 and the fixed electrode 3 and the electrostatic capacity between the vibrator 4 and the fixed electrode 6, the displacement being caused to occur by the Coriolis force and being exerted onto the vibrator 4, an A/D converter 8 for converting the output of the capacitance detector 7 to a digital signal, a signal Φ1 whose frequency is equal to the driving frequency fx and whose phase advances by the amount of 90 °as compared with the phase of the A/D output (i.e., the detected displacement of the vibrator 4) as is illustrated in Fig. 2, a synchronous-detection unit 9 for multiplying the displacement output in the detection-axis direction by Φ1 using a multiplier 10, the signal Φ2 whose phase is equal to the phase of the A/D output (i.e., the detected displacement of the vibrator 4), a LPF (: low-pass filter) 18 for extracting the DC component of the output of the synchronous-detection unit 9, a synchronous-detection unit 39 for multiplying the displacement output in the detection-axis direction by Φ2 using a multiplier 40, the fy-adjustment control unit 32, an adder 37 for adding a constant bias voltage Vb to the output of the fy-adjustment control unit 32, and a D/A converter 38 for converting the output of the adder 37 to an analog-signal voltage to apply the analog-signal voltage to the fy-adjustment electrode 31. Here, the fy-adjustment control unit 32 includes a delay circuit 33 which has a time delay equal to the inverse of the driving frequency fx, a comparator 34 for making a comparison between the output of the synchronous-detection unit 39 and the output of the delay circuit 33, and outputting "1" if the + (positive) side output is larger and outputting "-1" if the - (negative) side output is larger, an adder 35, and a delay circuit 36 which has a time delay equal to the inverse of the driving frequency fx. Next, the explanation will be given below concerning the operation of the angular-velocity sensor according to the first embodiment.

In the angular-velocity sensor according to the present embodiment, the displacement of the vibrator 4, which is caused to occur by the Coriolis force and exerted onto the vibrator 4, is detected using the fixed electrodes 3 and 6 and the capacitance detector 7. Moreover, the amplitude of the displacement is regarded as the detected signal of the angular velocity, then being outputted. First, with respect to the displacement signal of the vibrator 4 acquired via the capacitance detector 7 and the A/D converter 8, the synchronous-detection unit 39 performs the synchronous detection using the synchronous signal Φ2 illustrated in Fig. 2. As a result of this synchronous detection, the synchronous-detection unit 39 detects the vibration displacement in the direction perpendicular to the vibration-axis direction 20.

Next, in the fy-adjustment control unit 32, the comparator 34 makes the comparison between the output of the synchronous-detection unit 39 and signals accumulated in the delay circuit 33. If the output of the synchronous-detection unit 39 is larger than a one-period-earlier signal accumulated in the delay circuit 33, the comparator 34 outputs "1". Then, the adder 35 increments the one-period-earlier delay circuit 36 by 1. Also, in the reverse case, the adder 35 decrements the delay circuit 36 by 1. As illustrated in Fig. 2, in the time-interval during which the synchronous-detection output increases on a one-period basis, the comparator 34 outputs "1" continuously. Then, it turns out that, in the state where the output is converged into its maximum value, the output of the comparator 34 repeats +1 and -1 alternately. As a consequence, as is illustrated in the fy-adjustment output in Fig. 2, an adjustment voltage is outputted to the fy-adjustment electrode 31 so that the output of the synchronization result is always maintained at its maximum value while the vibration of ± 1 is being repeated on the one-period basis.

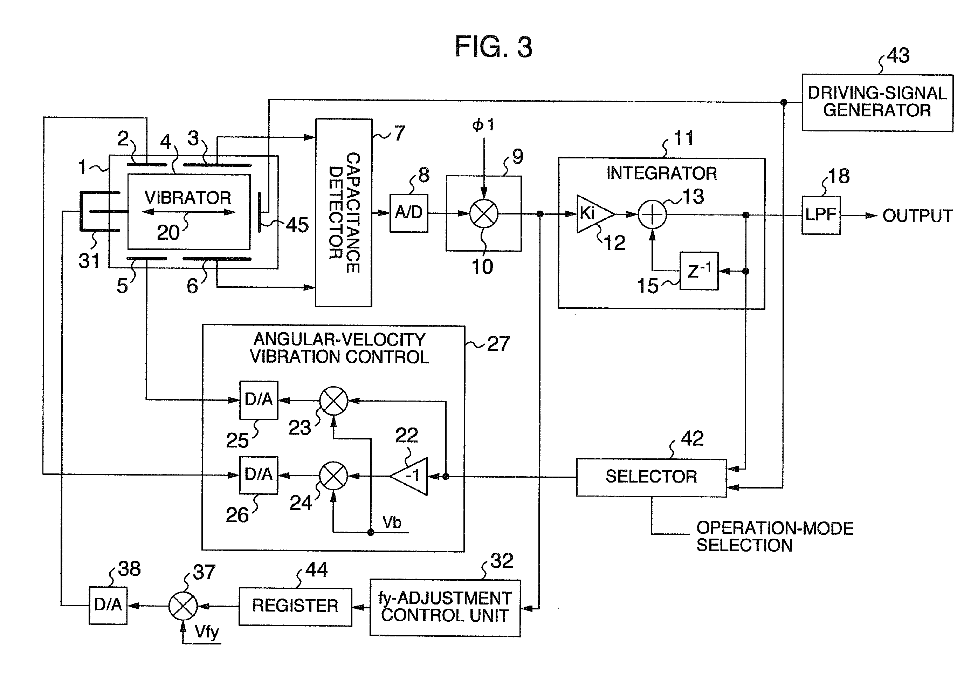

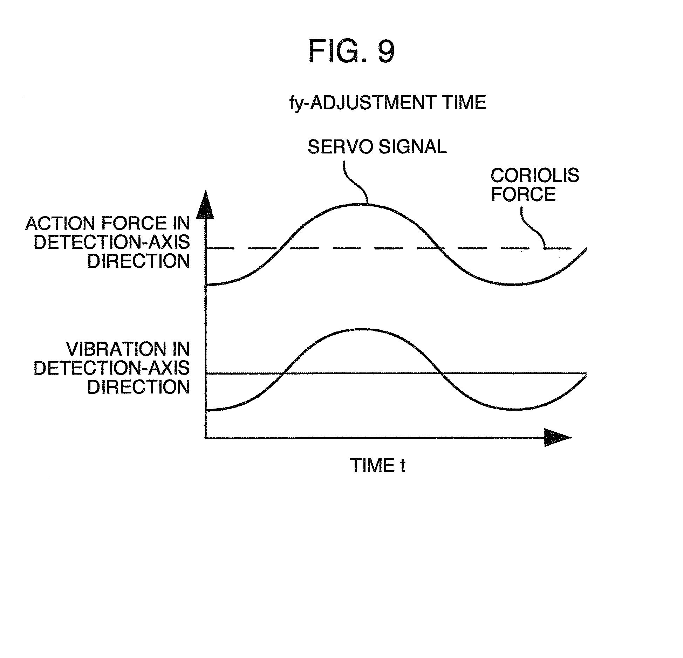

Next, referring to Fig. 3, Fig. 4, Fig. 8, and Fig. 9, the explanation will be given below concerning a second embodiment of the angular-velocity sensor of the present invention. In this embodiment, at the time of the stationary state, the vibrator 4 is forcefully vibrated in the detection-axis direction. Then, the adjustment voltage applied to the fy-adjustment electrode 31 is controlled so that the vibration amplitude at that time becomes its maximum value. Fig. 8 illustrates the displacement of the vibrator 4 at the time of the normal operation. The vibration that is caused to occur by the Coriolis force which is generated by the application of an angular velocity is suppressed by a signal applied to servo electrodes. Then, the signal amplitude with which the suppression force at this time is generated is regarded as the sensor output. Next, Fig. 9 illustrates the displacement of the vibrator 4 at the time of the fy adjustment. At the fy-adjustment time, an AC signal at the resonant frequency fx in the vibration-axis direction is inputted into the angular-velocity servo electrodes of the vibrator 4. This input of the AC signal forcefully vibrates the vibrator 4 in the detection-axis direction. Then, the control is performed so that the vibration amplitude is maintained at its maximum value.

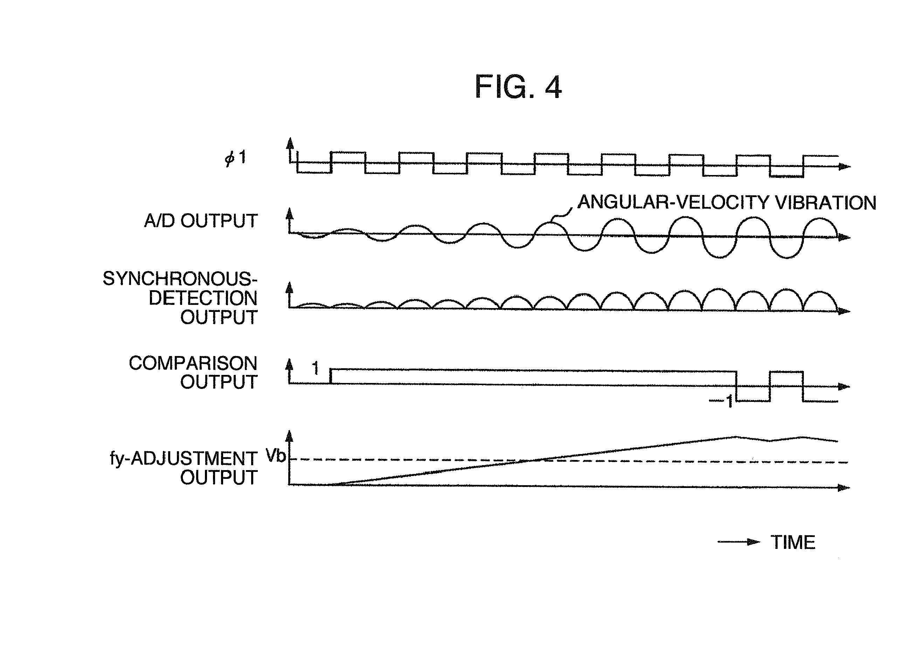

Fig. 3 is a block diagram for illustrating a signal processing circuit of the angular-velocity sensor according to the second embodiment. Fig. 4 illustrates the timing chart according to the second embodiment. A detection element 1 of the angular-velocity sensor according to the present embodiment includes the following configuration components: A vibrator 4 which has a predetermined mass, and which vibrates at the predetermined resonant frequency fx in the vibration-axis direction 20 illustrated in Fig. 1, a driving electrode 45 for vibrating the vibrator 4 in the vibration-axis direction, fixed electrodes 3 and 6 (i.e., displacement detecting units) which are deployed in a manner of being opposed to the vibrator 4, and which detect a displacement in accordance with a change in the electrostatic capacity, the displacement being caused to occur in the vibrator 4 in the direction perpendicular to the vibration-axis direction by a Coriolis force which is generated by the application of an angular velocity to the detection element 1, fixed electrodes 2 and 5 for exerting an electrostatic force onto the vibrator 4 so that the Coriolis force exerted onto the vibrator 4 is cancelled out by the electrostatic force, and the fy-adjustment electrode 31 for adjusting the resonant frequency fy of the vibration that is caused to occur in the vibrator 4 in the direction perpendicular to the vibration-axis direction. Also, the signal processing circuit includes the following configuration components: A capacitance detector 7 for detecting the displacement by detecting a difference between the electrostatic capacity between the vibrator 4 and the fixed electrode 3 and the electrostatic capacity between the vibrator 4 and the fixed electrode 6, the displacement being caused to occur by the Coriolis force and being exerted onto the vibrator 4, an A/D converter 8 for converting the output of the capacitance detector 7 to a digital signal, a signal Φ1 whose frequency is equal to the driving frequency fx and whose phase is equal to that of the A/D output (i.e., the detected displacement of the vibrator 4) as is illustrated in Fig. 4, a synchronous-detection unit 9 for multiplying the displacement output in the detection-axis direction by Φ1 using a multiplier 10, an integrator 11 including a

coefficient multiplier 12 for determining an integral gain, an adder 13 for performing an integral calculation, and a shift register including a delay circuit 15 which has a time delay equal to the inverse of the driving frequency fx, a LPF (: low-pass filter) 18 for extracting the DC component of the output of the integrator 11, and outputting the DC component as the detection result of the angular velocity, a driving-signal generator 43 for driving and controlling the vibrator 4 in the vibration-axis direction at the resonant frequency fx in the vibration-axis direction, a selector 42 for selecting the output of the integrator 11 at the time of the normal operation, and selecting, from the driving-signal generator 43, the AC signal at the resonant frequency fx in the vibration-axis direction at the time of adjusting the resonant frequency fy in the detection-axis direction, an adder 23 for adding a constant bias voltage Vb to the output of an adder 21 with respect to the output of the selector 42, a D/A converter 25 for converting the output of the adder 23 to an analog-signal voltage to apply the analog-signal voltage to the fixed electrode 5, an inverter 22 for inverting the signal from the adder 21, an adder 24 for adding the constant bias voltage Vb to the inverter 22, a D/A converter 26 for converting the output of the adder 24 to an analog-signal voltage to apply the analog-signal voltage to the fixed electrode 2, and the fy-adjustment control unit 32 explained in the first embodiment illustrated in Fig. 1.

Next, the explanation will be given below concerning the operation of the angular-velocity sensor according to the second embodiment. First, the explanation will be given below regarding the normal operation of the angular-velocity sensor. In the angular-velocity sensor according to the present embodiment, the displacement of the vibrator 4, which is caused to occur by the Coriolis force and is exerted onto the vibrator 4, is detected using the fixed electrodes 3 and 6 and the capacitance detector 7. Moreover, the cancel-out operation is performed such that the Coriolis force exerted onto the vibrator 4 and the leakage vibration leaking from the vibration-axis direction are canceled out by the electrostatic force. Here, this electrostatic force is generated between the fixed electrodes 2 and 5 and the vibrator 4 by applying a voltage to the fixed electrodes. Also, the leakage vibration is attributed to such factors as a distortion in the structure of the vibrator 4. As a method for implementing this cancel-out operation, the following servo control is performed: A voltage for making the displacement of the vibrator 4 equal to zero is fed back to the angular-velocity sensor. Here, the displacement of the vibrator 4 is caused to occur in the direction perpendicular to the vibration-axis direction by the Coriolis force. Furthermore, a partial voltage of the feedback voltage at that time is regarded as the detected signal of the angular velocity, then being outputted. First, with respect to the displacement signal of the vibrator 4 acquired via the capacitance detector 7 and the A/D converter 8, the synchronous-detection unit 9 performs the synchronous detection using the synchronous signal Φ1 illustrated in Fig. 4. As a result of this synchronous detection, the synchronous-detection unit 9 detects the vibration displacement (which, hereinafter, will be referred to as "Coriolis component") in the direction perpendicular to the vibration-axis direction 20. Next, the integrator 11 integrates the signal acquired by the synchronous-detection unit 9. Moreover, in order to feed back the signal acquired by the integrator 11 to the vibrator 4, the output of the integrator 11 is inputted into an angular-velocity vibration control unit 27 by the selector 42. The angular-velocity vibration control unit 27 multiplies the Coriolis component by the inverted signal of Φ2 using a multiplier 19, thereby generating the feedback signal with respect to the vibration displacement which is attributed to the angular velocity in the direction perpendicular to the vibration-axis direction of the vibrator 4. Furthermore, the adders 23 and 24 add the constant bias voltage Vb to the feedback signal, then applying the addition results to the fixed electrodes 2 and 5 of the vibrator 4. This application makes it possible to cancel out the vibration displacement in the direction perpendicular to the vibration-axis direction. Also, the output of the integrator 11 in the case where this vibration displacement is canceled out is outputted as the detection result of the angular velocity via the low-pass filter 18. Next, the explanation will be given below regarding the adjustment operation of the resonant frequency fy in the detection-axis direction. First, the driving signal of the driving-signal generator 43 is selected based on an operation-mode selection signal, then being outputted via the selector 42. In addition, the output from the selector is inputted into the angular-velocity servo electrodes 2 and 5. When the vibrator 4 performs none of the vibration in the detection-axis direction, the vibrator 4 is forcefully vibrated at the resonant frequency fx by applying the AC voltage at the resonant frequency fx to the vibrator 4. In this state, as illustrated in Fig. 4, the synchronous detection is applied to the output of the A/D converter 8.

Moreover, the fy-adjustment control by the fy-adjustment control unit 32 explained in the first embodiment in Fig. 1 is carried out with respect to the output result of the synchronous detection. This fy-adjustment control allows the detection-axis-side resonant frequency fy to coincide with the vibration-axis-side resonant frequency fx, thereby making it possible to maintain the sensor sensitivity at a constant value.

It should be further understood by those skilled in the art that although the foregoing description has been made on embodiments of the invention, the invention is not limited thereto and various changes and modifications may be made without departing from the spirit of the invention and the scope of the appended claims.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. An angular-velocity detecting apparatus, comprising:
a vibrator (4) that is displaceable in a first direction (20) and a second direction which are orthogonal to each other, wherein
said angular-velocity detecting apparatus detects amount of a displacement of said vibrator (4), said displacement occurring when said vibrator (4) is displaced in said second direction by occurrence of an angular velocity in a state where said vibrator (4) is vibrated in said first direction (20),
said angular-velocity detecting apparatus, further comprising:
means (1) for detecting a displacement, said displacement occurring permanently in said second direction regardless of said occurrence of said angular velocity; and
means (32) for adjusting resonant frequency in said second direction in correspondence with detection output of said displacement-detecting means (1).

2. The angular-velocity detecting apparatus according to Claim 1, wherein
said displacement is a leakage vibration in said second direction,
said displacement occurring permanently in said second direction independently of said occurrence of said angular velocity, said leakage vibration occurring in said state where said vibrator (4) is vibrated in said first direction (20).

3. The angular-velocity detecting apparatus according to Claim 1 or 2, wherein
said means (32) for adjusting said resonant frequency in said second direction adjusts a voltage so that said amount of said detected displacement is always maintained at its maximum value, said voltage being applied to said vibrator (4).

4. An angular-velocity detecting apparatus, comprising:
a vibrator (4) that is displaceable in a first direction (20) and a second direction which are orthogonal to each other, wherein
said angular-velocity detecting apparatus comprises:
a servo function which functions for suppressing a displacement of said vibrator (4) in said second direction, said displacement occurring by occurrence of an angular velocity in a state where said vibrator (4) is vibrated in said first direction (20);
said angular-velocity detecting apparatus, further comprising:
servo electrodes (2, 5) provided on said vibrator (4) for suppressing said displacement of said vibrator (4) in said second direction;
means (43) for applying a signal to said vibrator (4), said signal being designed for vibrating said vibrator (4) in said second direction;
means (3, 6, 7) for detecting said displacement of said vibrator (4) occurring in said second direction; and
means (32) for adjusting resonant frequency in said second direction in correspondence with detection output of said displacement-detecting means (3, 6, 7).

5. The angular-velocity detecting apparatus according to Claim 4, wherein
said signal for vibrating said vibrator (4) in said second direction has a frequency equal to said resonant frequency in said first direction, or a frequency having a constant frequency difference from said resonant frequency in said first direction.

6. The angular-velocity detecting apparatus according to Claim 4 or 5, wherein
said means (32) for adjusting said resonant frequency in said second direction adjusts a voltage so that said amount of said detected displacement is always maintained at its maximum value, said voltage being applied to said vibrator (4).

7. The angular-velocity detecting apparatus according to at least one of Claims 1 to 6, wherein
said means (32) for adjusting said resonant frequency in said second direction generates a signal to apply said signal to said vibrator (4),
said signal has a frequency equal to resonant frequency in said first direction, or a frequency having a constant frequency difference from said resonant frequency in said first direction.

8. An angular-velocity detecting apparatus according to Claim 1, wherein
said angular-velocity detecting apparatus comprises:
a servo function which functions for suppressing a displacement of said vibrator (4) in said second direction, said displacement occurring by occurrence of an angular velocity in a state where said vibrator (4) is vibrated in said first direction (20);
said angular-velocity detecting apparatus, further comprising:
servo electrodes (2, 5) provided on said vibrator (4) for suppressing said displacement of said vibrator (4) in said second direction;
means (43) for applying a signal to said vibrator (4), said signal being designed for vibrating said vibrator (4) in said second direction; and
means (3, 6, 7) for detecting said displacement of said vibrator (4) occurring in said second direction.

9. The angular-velocity detecting apparatus according to Claim 8, wherein
said signal for vibrating said vibrator (4) in said second direction has a frequency equal to said resonant frequency in said first direction, or a frequency having a constant frequency difference from said resonant frequency in said first direction.

10. The angular-velocity detecting apparatus according to Claim 8 or 9, wherein
said means (32) for adjusting said resonant frequency in said second direction adjusts a voltage so that said amount of said detected displacement is always maintained at its maximum value, said voltage being applied to said vibrator (4).

11. The angular-velocity detecting apparatus according to at least one of Claims 8 to 10, wherein
said means (32) for adjusting said resonant frequency in said second direction generates a signal to apply said signal to said vibrator (4),
said signal has a frequency equal to resonant frequency in said first direction, or a frequency having a constant frequency difference from said resonant frequency in said first direction.
